**Europäisches Patentamt**

**European Patent Office**

**Office européen des brevets**

(19)

(11) Veröffentlichungsnummer: **0 216 134**

**A1**

(12) # EUROPÄISCHE PATENTANMELDUNG

(21) Anmeldenummer: **86111417.1**

(22) Anmeldetag: **18.08.86**

(51) Int. Cl.⁴: **A 01 K 69/10**

(30) Priorität: **27.08.85 DD 280022**

(43) Veröffentlichungstag der Anmeldung:
**01.04.87 Patentblatt 87/14**

(84) Benannte Vertragsstaaten:
**BE DE FR GB LU NL**

(71) Anmelder: **VEB Kombinat Sportgeräte Schmalkalden**
**Strasse der DSF 124**
**DDR-6080 Schmalkalden(DD)**

(72) Erfinder: **Riemer, Ulrich**
**Hauptstrasse 3**
**DDR-1602 Bestensee(DD)**

(74) Vertreter: **Patentanwälte Beetz sen. - Beetz jun. Timpe -**
**Siegfried - Schmitt-Fumian**
**Steinsdorfstrasse 10**
**D-8000 München 22(DE)**

(54) **Fischreuse.**

(57) Die Fischreuse ist insbesondere für den Aal- und Krebsfang anwendbar.

Es soll bei geringem Material-, Herstellungs- und Wartungsaufwand, reduziertem Transportvolumen, leichter Handhabung und verbesserter Fängigkeit, ein geringer Strömungswiderstand, eine ununterbrochene Spannung des Netzes
und ein einfacher Aufbau gewährleistet werden.

Erfindungsgemäß wird das dadurch erreicht, daß das
Netz ein zylindrischer Quadrat- oder Wabenmaschen aufweisender mittels der ringförmigen Einlaß-, Kehlen- und Stertbügel (1,2,3) sowie Spreizstangen (4), spannbarer Netzschlauch (10) ist, wobei zwischen dem Einlaßbügel (1) und
dem Kehlenbügel (2) eine trichterförmige Vorderkehle (8),
und zwischen dem Kehlenbügel (2) und dem Stertbügel (3)
eine trichterförmige Hinterkehle (2) angeordnet ist und der
Ösen (5) aufweisende Einlaßbügel (1) an den Spreizstangen
(4) einhängbar ist und der Kehlenbügel (2) und der Stertbügel
(3) über Ringe verschiebbar auf den in einem Spreizstangenkreuz (7) zusammengeführten Spreizstangen (4) angeordnet ist, wobei der Netzschlauch (10) an seinem mit einer
Stertschnur (6) verschlossenen Ende in dem Kreuzungspunkt
des Spreizstangenkreuzes (7) ununterbrochen gespannt
gehalten ist.

./...

EP 0 216 134 A1

Fig. 2

Berlin, den 24.07.1986
01542 EP   23

Fischreuse

Die Erfindung bezieht sich auf eine Fischreuse, insbesondere für den Aal- und Krebsfang, bestehend aus einem Netz und ringförmigen Einlaß-, Kehlen- und Stertbügeln.

Bekannte Reusen zum Fischfang weisen z. B. Flügel oder Leitnetze auf, sie bestehen zum Teil auch aus Weidengeflecht oder Drahtkonstruktionen.

In dem DE-GM 6750865 ist ein Endstück oder einen Fangkorb für Reusen zum Fisch- oder Aalfang beschrieben, daß aus zwei Netzabschnitten mit je einer Kehle, die durch Bügel gespreizt gehalten werden, besteht, wobei das Endstück aus einem etwa zylindrischen Korb mit durchlässigem Boden und durchlässigen Seitenwänden aus zerbißsicherem Material gefertigt ist. In seinem Inneren befindet sich eine weitere Kehle. Der Boden ist zur Entleerung leicht lösbar.

Zur Entleerung des Fangs muß die Reuse von den sie haltenden Pfühlen gelöst und komplett aus dem Wasser gezogen werden.

Diese Ausführung erfordert aufgrund ihrer Konstruktion einen hohen Material-, Kosten- und Herstellungsaufwand, auf Grund ihrer Form ein großes Transportvolumen und einen hohen Wartungsaufwand während des Fanges.

Nach der Lehre der DE-PS 1 157 839 ist eine Doppelreuse bekanntgeworden, die runde Bügel und aus je zwei dreieckigen Netzstücken gebildete, vertikal verlaufende, längliche Kehlen besitzen kann. Dabei sind die dreieckigen Netzstücke mit der Spitze an größeren Bügeln seitlich rechts und links und mit der Grundlinie an der höchsten und tiefsten Stelle des nächst kleineren Bügels angeordnet und mit den Seitenkanten in das äußere Netzwerk eingenäht. Sie lassen am jeweils kleineren Bügel mehr oder weniger breite schlitzförmige, über den ganzen Durchmesser reichende vertikale Durchlässe frei.

Diese Reuse wird ebenfalls mittels Pfählen am Grund des Gewässers gehalten und erfordert aufgrund ihrer Ausführung einen aufwendigen Materialeinsatz, großes Transportvolumen und einen hohen Wartungsaufwand während des Fanges.

In der DE-PS 1 141 485 ist eine Fischreuse insbesondere für den Aalfang beschrieben, die aus Kunststoff mit einem trichterförmigen Einlauf, einem Rumpf und einem trichterförmigen Ende als Fangkammer besteht und die im wesentlichen aus drei Teilen zusammensetzbar ist, wobei die Flächen der einzelnen Teile gitterförmig ausgebildet sind und die ringförmig verlaufenden Rippen des Gitters an der Außenfläche und die achsparallel verlaufenden Rippen des Gitters an der Innenfläche der einzelnen Teile liegen. Das Einlaufteil ist überdacht. Durch die Konstruktion dieser Reuse ist es möglich, diese im zerlegten Zustand zu transportieren und im Boot erst am Fangplatz zusammenzusetzen. Die Reuse ist auf dem Grund des Gewässers gelagert, wobei die Rumpfteile mittels Zugbandverschlüssen fest verbunden werden. Diese Zugbandverschlüsse müssen bei der Entnahme des Fanges aufgeschnitten werden und anschließend wieder neu befestigt werden.

Auch bei dieser Ausführung ist der Herstellungs- und Wartungsaufwand sehr hoch, wobei aber aufgrund der variierbaren Länge und der Überdeckung der Reuse und der damit möglichen Anpassung

0216134

an die Umweltbedingungen höhere Fangergebnisse erzielt werden
können.

Bei allen bekannten Ausführungen für Reusen ist es zur Erzielung eines hohen Fangergebnisses notwendig, diese während
des Fanges ständig nachzuspannen und zu warten. Desweiteren
sind zu ihrer Herstellung große Mengen Netz- oder Plastmaterial
erforderlich, wobei für viele Ausführungen starre, weitgeöffnete Kehlenspitzen bzw. über den ganzen Reusendurchmesser
reichende schlitzartige Kehlen charakteristisch sind. Aufgrund
ihrer Konstruktion ist der Strömungswiderstand relativ hoch.

Als nachteilig wird weiter erkannt, daß der Arbeitsaufwand
beim Stationieren der Reusen, bedingt durch das Einbringen
von Pfählen in den Grund des Gewässers zum Spannen der Leitnetze, der Kehlen und der Fischreuse sehr hoch ist. Im Verlauf
der Fangsaison vom Frühjahr bis zum Herbst muß das gesamte
Fischreusenfangsystem mehrmals über einen längeren Zeitraum
aus dem Wasser zur Säuberung, zum Trocknen und Nachspannen
bzw. Nachstellen der Netze herausgenommen werden.

Um diese Fischreusen während des Fanges unter Spannung zu
halten, ist es notwendig, diese in einem Kontrollsystem, in
der Regel zwei bis drei Tage, zu heben und zu warten.

Durch die Erfindung wird eine Fischreuse zur Verfügung gestellt, die eine leichte Handhabung einen geringen Material-
und Herstellungsaufwand sowie ein wesentlich reduziertes
Transportvolumen erfordert und eine verbesserte Fängigkeit
gewährleistet, wobei keine Wartungsarbeiten während des
Fanges notwendig sind.

Der Erfindung liegt die Aufgabe zugrunde, eine Fischreuse, insbesondere für den Aal- und Krebsfang zu schaffen, die bei geringem Strömungswiderstand eine ununterbrochene Spannung des Netzes erhält sowie einfach im Aufbau ist.

Erfindungsgemäß wird diese Aufgabe dadurch gelöst, daß das Netz ein zylindrischer Quadrat- oder Wabenmaschen aufweisender mittels der ringförmigen Einlaß-, Kehlen- und Stertbügel sowie Spreizstangen spannbarer Netzschlauch ist, wobei zwischen dem Einlaßbügel und dem Kehlenbügel eine trichterförmige Vorderkehle und zwischen dem Kehlenbügel und dem Stertbügel eine trichterförmige Hinterkehle angeordnet ist und der Ösen aufweisende Einlaßbügel an den Spreizstangen einhängbar ist und der Kehlenbügel und der Stertbügel über Ringe verschiebbar auf den in einem Spreizstangenkreuz zusammengeführten Spreizstangen angeordnet ist, wobei der Netzschlauch an seinem mit einer Stertschnur verschlossenen Ende in dem Kreuzungspunkt des Spreizstangenkreuzes ununterbrochen gespannt gehalten ist.

Von Vorteil ist es, wenn die Spreizstangen eine Steckverbindung aufweisen. Dadurch ist ein einfacher platzsparender und problemloser Transport der Fischreuse gewährleistet.

Die erfindungsgemäße Lösung sieht vor, daß die Vorderkehle durch vom Einlaßbügel zum Kehlenbügel verlaufende die Vorderkehle in einer bestimmten Öffnung haltende Vorderkehlenspannschnüre ununterbrochen gespannt ist.

Vorzugsweise ist die Hinterkehle durch vom Kehlenbügel zum Stertbügel verlaufende die Hinterkehle in einer bestimmten Öffnung haltende Hinterkehlenspannschnüre ununterbrochen gespannt.

In weiterer Ausführung weist die Vorderkehle eine ständig
weit geöffnete Kehlenspitze und die sich an die Vorderkehle
anschließende Hinterkehle eine schlitzartig gespannte
Kehlenspitze auf.

Durch diese Lösung ist die Fischreuse ununterbrochen und zuverlässig gespannt, so daß während des Fanges kein Nachspannen bzw. Nachstellen erforderlich ist und damit auch
eine Beunruhigung des Fangplatzes vermieden wird. Ihre Handhabung ist aufgrund ihres Aufbaues leicht und problemlos. Der
mit ihr erzielbare Fang ist gegenüber dem Fang mit den
bekannten Fischreusen wesentlich erhöht, wobei durch ihre
konstruktive Ausgestaltung der Strömungswiderstand gering ist.

Besonders vorteilhaft wirkt sich dabei aus, daß die bisher
notwendigen Arbeiten, das Einbringen der Befestigungspfähle
im Untergrund zum Spannen der Leitnetze, der Kehlen und der
gesamten Fischreuse entfallen, da für die erfindungsgemäße
Fischreuse diese Arbeiten nicht notwendig sind und auch durch
die Zerlegbarkeit der Spreizstangen der Transport vereinfacht
ist.

Die höchsten Fangergebnisse wurden in Binnengewässern, wie
Binnenseen, Flüssen, Kanälen, Bächen, Entwässerungsgräben
u.dgl., an Uferböschungen, in der Uferregion, besonders
in Schilfschneiden und am Schilfrand erzielt.

Die Erfindung soll nachfolgend an einem Ausführungsbeispiel
näher erläutert werden. In der zugehörigen Zeichnung zeigen:

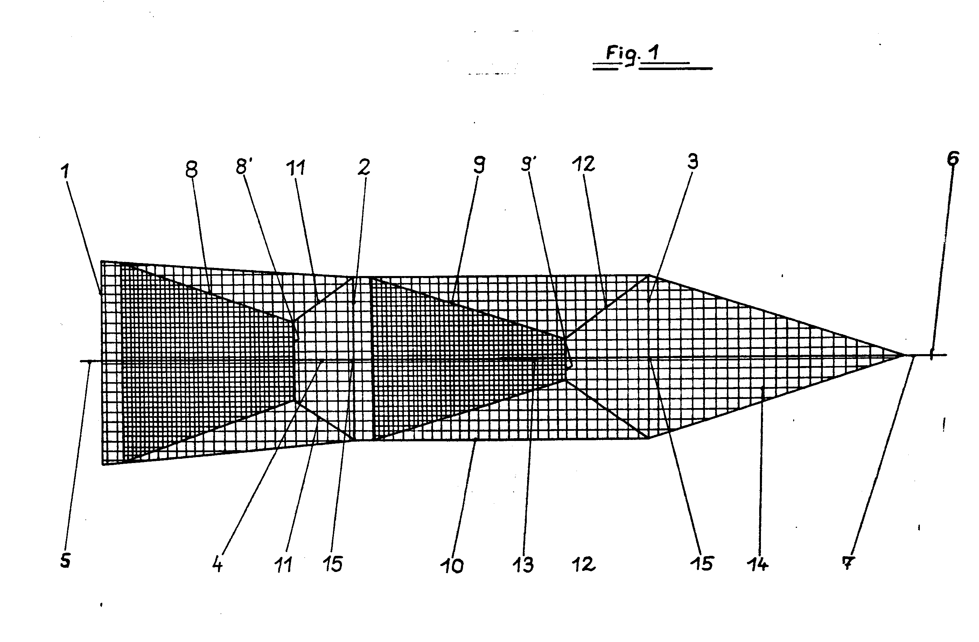

Fig. 1: Seitenansicht der Fischreuse

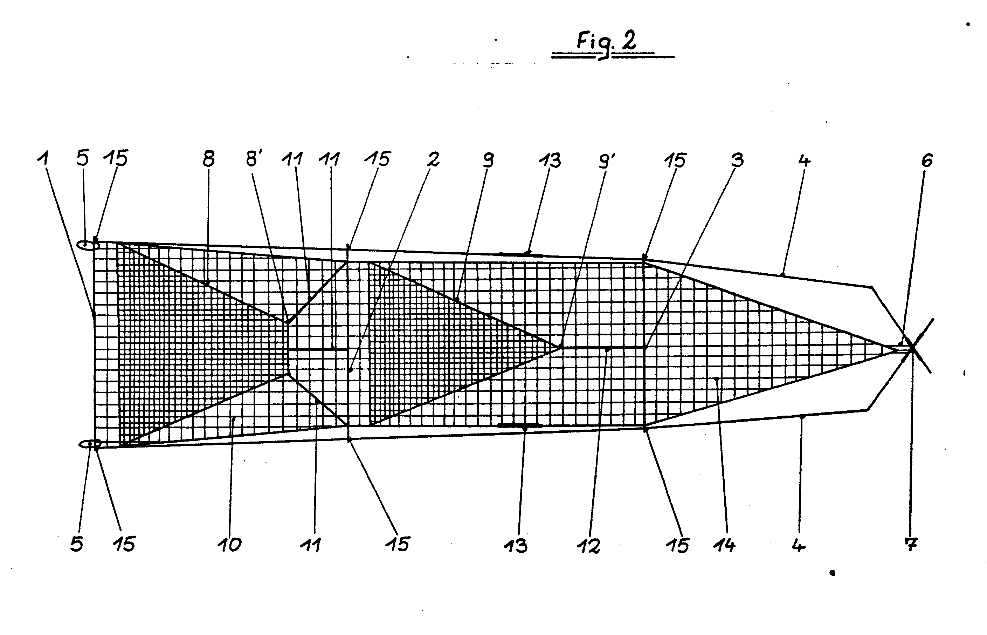

Fig. 2: Draufsicht der Fischreuse.

Die erfindungsgemäße Fischreuse basiert auf einer bisher in der Regel nicht praktizierten Fangtechnik beim Fischen mit Reusen, insbesondere beim Aal- und Krebsfang.

Die bisher angewandten Fangmethoden tragen dem Wandertrieb und der Futtersuche des Aales Rechnung, so daß er durch Leitnetze und Flügelsysteme in eine Fischreuse hineingeleitet wird. Entgegen dieser Fangmethode besteht die der erfindungsgemäßen Fischreuse darin, daß der Aal nach der Futteraufnahme und aufgrund seines natürlichen Ruhebedürfnisses nach längerer Wanderzeit einen geschützten Ruheplatz sucht, den er in der Fischreuse findet, demzufolge ist es auch möglich, sie in den Abmessungen kleiner zu gestalten als die bekannten Fischreusen.

Die aufgespannte Fischreuse wird am Fangplatz im Wasser bis auf den Boden niedergelassen. Da der Aal ein ausgesprochener "Gesellschaftsfisch" ist, sammeln sich in der Fischreuse erfahrungsgemäß größere Mengen.

Die Fischreuse weist einen zylindrischen Netzschlauch 10 mit Quadrat- oder Wabenmaschen 14 auf. Dadurch wird eine maximale Flächenausnutzung des Netzmaterials erreicht. Durch die gewählte Maschenform wird das Maschen von kleinen Fischen bzw. Jungfischen gegenüber den sonst üblichen diagonalen Maschenformen fast ganz vermieden, so daß diese ungehindert die Fischreuse passieren können.

Der Netzschlauch 10 wird durch einen ringförmigen Einlaß- 1, Kehlen- 2 und Stertbügel 3 in axialer Richtung straff gespannt. Innerhalb der Fischreuse ist zwischen dem Einlaßbügel 1 und dem Kehlenbügel 2 eine Vorderkehle 8 und zwischen dem Kehlenbügel 2 und dem Stertbügel 3 eine Hinterkehle 9 angeordnet.

Die ununterbrochene Spannung der gesamten Fischreuse wird
dadurch gewährleistet, daß der am ringförmigen Einlaßbügel 1,
welcher mit Ösen 5 an den Spreizstangen 4 eingehangen wird,
befestigte Netzschlauch 10 an seinem mit einer Stertschnur 6
verschlossenen Ende mittels dieser an den zusammenlaufenden
Spreizstangen 4 im Kreuzungspunkt des Spreizstangenkreuzes 7
straff befestigt ist.

Die Spreizstangen 4 sind mit einer Steckverbindung 13 versehen, mittels derer sie zusammensteckbar beziehungsweise
in zwei Teile zerlegbar sind. Die Vorderkehle 8 wird vom
Einlaßbügel 1 durch die Vorderkehlenspannschnüre 11 zum
Kehlenbügel 2 derart gespannt, daß eine relativ große
vorzugsweise quadratische Öffnung der Kehlenspitze 8' entsteht. Die Hinterkehle 9 wird dagegen durch die Hinterkehlenspannschnüre 12 zum Stertbügel 3 derart gespannt, daß eine
schmale beispielsweise schlitzartige Öffnung der Kehlenspitze
9' entsteht.

Der Aal fängt sich in der Fischreuse dadurch, daß er zunächst in die vom Einlaßbügel 1 zum Kehlenbügel 2 gespannte
Vorderkehle 8 hineinschwimmt und dann durch den weit geöffneten Vorderkehlenaustritt durch die Hinterkehle 9 in das
hintere Ende der Fischreuse, das mit der Stertschnur 6 verschlossen ist geleitet wird. Da die schlitzförmige Öffnung
der Hinterkehle 9 sehr eng ist, kann der Aal nicht mehr
in Richtung Vorderkehle 8 entweichen.

Die Fangentnahme erfolgt in einfacher Weise, indem die Fisch-

reuse mit den gefangenen Aalen bzw. Krebsen vom Fangplatz in das Boot gehoben, die Stertschnur 6 geöffnet und der Inhalt in den Fischfangkübel des Bootes entleert wird. Durch das Öffnen der Stertschnur 6 erfolgt ein Entspannen der Fischreuse zwischen den Spreizstangen 4. Nach erfolgter E-ntleerung wird die Fischreuse durch Anspannen der Stertschnur 6 am Spreizstangenkreuz 7 wieder fangfertig und kann wieder auf ihren Fangplatz im Wasser gestellt werden.

Aufgrund ihrer Konstruktion ist die Fischreuse besonders wartungsarm. Es ist nicht notwendig, daß sie täglich kontrolliert, nachgespannt und vom Fang entleert wird.

Aufgrund der erfindungsgemäßen Anordnung der Maschen in Quadrat- oder Wabenform sowie des verwendeten Netzmaterials ist eine Verletzungsgefahr der in die Fischreuse einschwimmenden bzw. darin befindlichen Aale bzw. Krebse vermieden, so daß sie dadurch in jedem Falle unverletzt bleiben und nicht verderbgefährdet sind.

Es genügt somit eine zehn- bis vierzehntägige Kontrolle und Entleerung, während die Reuse gleichzeitig in der gesamten Fangsaison am Fangplatz verbleiben kann.

**0216134**

## Aufstellung der verwendeten Bezugszeichen

1    Einlaßbügel

2    Kehlenbügel

3    Stertbügel

4    Spreizstangen

5    Ösen

6    Stertschnur

7    Spreizstangenkreuz

8    Vorderkehle

8'   Kehlenspitze

9    Hinterkehle

9'   Kehlenspitze

10   zylindrischer Netzschlauch

11   Vorderkehlenspannschnüre

12   Hinterkehlenspannschnüre

13   Steckverbindung

14   Quadrat- oder Wabenmaschen

15   Ringe

## Patentansprüche

1. Fischreuse, insbesondere für den Aal- und Krebsfang, bestehend aus einem Netz (10) und ringförmigen Einlaß- (1), Kehlen- (2) und Stertbügel (3), dadurch gekennzeichnet, daß das Netz ein zylindrischer Quadrat- oder Wabenmaschen (14) aufweisender mittels der ringförmigen Einlaß- (1), Kehlen- (2) und Stertbügel (3) sowie Spreizstangen (4) spannbarer Netzschlauch (10) ist, wobei zwischen dem Einlaßbügel (1) und dem Kehlenbügel (2) eine trichterförmige Vorderkehle (8) und zwischen dem Kehlenbügel (2) und dem Stertbügel (3) eine trichterförmige Hinterkehle (9) angeordnet ist und der Ösen (5) aufweisende Einlaßbügel (1) an den Spreizstangen (4) einhängbar ist und der Kehlenbügel (2) und der Stertbügel (3) über Ringe (15) verschiebbar auf den in einem Spreizstangenkreuz (7) zusammengeführten Spreizstangen (4) angeordnet ist, wobei der Netzschlauch (10) an seinem mit einer Stertschnur (6) verschlossenen Ende in dem Kreuzungspunkt des Spreizstangenkreuzes (7) ununterbrochen gespannt gehalten ist.

2. Fischreuse nach Patentanspruch 1, dadurch gekennzeichnet, daß die Spreizstangen (4) eine Steckverbindung (13) aufweisen.

3. Fischreuse nach Patentanspruch 1, dadurch gekennzeichnet, daß die Vorderkehle (8) durch vom Einlaßbügel (1) zum Kehlenbügel (2) verlaufende die Vorderkehle (8) in einer bestimmten Öffnung haltende Vorderkehlenspannschnüre (11) ununterbrochen gespannt ist.

4. Fischreuse nach Patentanspruch 1, dadurch gekennzeichnet, daß die Hinterkehle (9) durch vom Kehlenbügel (2) zum Stertbügel (3) verlaufende die Hinterkehle (9) in einer bestimmten Öffnung haltende Hinterkehlenspannschnüre (12) unununterbrochen gesannt ist.

5. Fischreuse nach Patentanspruch 1; 3 und 4, dadurch gekennzeichnet, daß die Vorderkehle (8) eine ständig weit geöffnete Kehlenspitze (8') und die sich an die Vorderkehle (8) anschließende Hinterkehle (9) eine schlitzartig gespannte Kehlenspitze (9') aufweist.

Fig. 1

Fig. 2

2/2

0216184

# 0216134

Europäisches
Patentamt

**EUROPÄISCHER RECHERCHENBERICHT**

Nummer der Anmeldung

EP 86 11 1417

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y,A | US-A-1 985 177 (J.T. LAWRENCE) <br> * vollständiges Dokument * | 1 | A 01 K 69/10 |
| Y | DK-C- 75 795 (E. MUNK) <br> * vollständiges Dokument * | 1 | |
| A | | 3-5 | |
| Y | US-A-4 429 659 (H.K. HOLYOAK) <br> * Figuren 1, 2 * | 1 | |
| A | | 2 | |
| Y | DE-C- 423 907 (A. VON LOEPER) <br> * vollständiges Dokument * | 1,2 | |
| A | US-A-2 948 980 (J.T. WORCESTER) <br> * Figur 6 * | 1 | **RECHERCHIERTE SACHGEBIETE (Int Cl.4)** <br> A 01 K 69/00 |
| Y,A | DK-C- 21 944 (S. LARSSON) <br> * Figuren 1-9 * | 1,2 | |
| D,A | DE-U-6 750 865 (G. BASEDOW) <br> * Figur 1 * | 1 | |
| D,A | DE-C-1 157 839 (H. BEGIER) <br> * Figuren * | 1 | |
| | --- -/- | | |

Der vorliegende Recherchenbericht wurde für alle Patentansprüche erstellt.

| BERLIN <br> Recherchenort | 28-11-1986 <br> Abschlußdatum der Recherche | WUNDERLICH J E <br> Prüfer |
|---|---|---|

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-C-1 141 485 (FA. F. STUCKENBRÖKER) <br> * Figur 1 * | 1 | |

-----

Der vorliegende Recherchenbericht wurde für alle Patentansprüche erstellt.

RECHERCHIERTE SACHGEBIETE (Int. Cl.4)

| Recherchenort | Abschußdatum der Recherche | Prüfer |
|---|---|---|
| BERLIN | 28-11-1986 | WUNDERLICH J E |